# EUROPEAN PATENT APPLICATION

(11) **EP 2 767 325 A1**
(43) Date of publication of application: **20.08.2014**
(21) Application number: 13155254.9
(22) Date of filing: 14.02.2013
(51) Int. Cl.: B01D 53/14

(54) **Process for the removal of carbon dioxide from a gas**

(71) Applicant: Shell Internationale Research Maatschappij B.V., 2596 HR The Hague (NL)
(72) Inventor: Wesker, Evert, 1031 HW Amsterdam (NL); van Mossel, Gerardus Antonius Franciscus, 1031 HW Amsterdam (NL); van Straelen, Jiri Peter Thomas, 1031 HW Amsterdam (NL)
(74) Representative: Matthezing, Robert Maarten

(57) **Abstract**

A process for the removal of CO₂ from a gas comprising CO₂ is provided, the process comprising the steps of:
(a) contacting the gas in an absorber with an aqueous solution of one or more carbonate compounds in the presence of an accelerator, and an alcohol comprising at least two OH-groups, thereby reacting at least part of the CO₂ to form a bicarbonate compound;
(b) pressurising the aqueous solution comprising the bicarbonate compound, to obtain a pressurised aqueous solution comprising the bicarbonate compound;
(c) transferring the pressurised aqueous solution to a regenerator system and applying heat to liberate CO₂ from the carbonate slurry to obtain a CO₂-rich gas stream and a regenerated carbonate stream.

## Description

### Field of the invention

The invention relates to a process for removal of carbon dioxide (CO₂) from a gas.

### Background of the invention

During the last decades there has been a substantial global increase in the amount of CO₂ emission to the atmosphere. Emissions of CO₂ into the atmosphere are thought to be harmful due to its "greenhouse gas" property, contributing to global warming. Following the Kyoto agreement, CO₂ emission has to be reduced in order to prevent or counteract unwanted changes in climate. One of the large sources of CO₂ emission is combustion of fossil fuels, for example coal or natural gas, for electricity generation and the use of petroleum products as transportation and heating fuel. These processes result in the production of gases comprising CO₂. Thus, removal of at least part of the CO₂ prior to emission of these gases into the atmosphere is desirable.

Processes for removal of CO₂ are known in the art. In 1950 Benson and Field developed the Benfield process which is a thermally regenerated cyclic solvent process that uses an activated, inhibited hot potassium carbonate solution to remove CO2, H2S and other acid gas components.

In WO 2006/134225 a method and an apparatus is described for recovering CO₂ from flue gases, in which method the flue gases are washed with an alkali metal carbonate containing washing solution in a scrubber. The alkali metal bicarbonate concentration of the solution is increased to such a high level that crystalline alkali metal bicarbonate containing alkali metal bicarbonate slurry is formed.

WO 2008/072979 describes a method for capturing CO₂ form exhaust gas in an absorber, wherein the CO₂ containing gas is passed through an aqueous absorbent slurry comprising an inorganic alkali carbonate, bicarbonate and at least one of an absorption promoter and a catalyst, wherein the CO2 is converted to solids by precipitation in the absorber. The slurry is conveyed to a separating device in which the solids are separated off.

In WO 2009/153351 a process is described wherein the CO₂ containing gas is passed through an aqueous absorbent slurry comprising an inorganic alkali carbonate, bicarbonate and an accelerator, wherein the CO2 is converted to solids by precipitation in the absorber. The formed bicarbonate slurry is concentrated and transferred to a regenerator, where regeneration is established using heat. The regenerated carbonate slurry is returned to the absorber.

There remains a need for a simple, energy-efficient process for removal of CO₂ from gases. There furthermore remains a need to improve the regeneration of the absorbent.

### Summary of the Invention

The invention provides a process for the removal of CO₂ from a gas comprising CO₂, the process comprising the steps of:
(a) contacting the gas in an absorber with an aqueous solution of one or more carbonate compounds in the presence of an accelerator, and an alcohol comprising at least two OH-groups, thereby reacting at least part of the CO₂ to form a bicarbonate compound;
(b) pressurising the aqueous solution comprising the bicarbonate compound, to obtain a pressurised aqueous solution comprising the bicarbonate compound;
(c) transferring the pressurised aqueous solution to a regenerator system and applying heat to liberate CO₂ from the carbonate slurry to obtain a CO₂-rich gas stream and a regenerated carbonate stream.

The process enables removal of CO₂ from the gas to low levels, resulting in a purified gas, which can be emitted into the atmosphere.

An important advantage of the process is that an aqueous solution is used, having a relatively low volatility. The presence of the alcohol comprising at least two OH-groups enhances that less water is vaporised during the regeneration of the absorbent. As vaporised water requires condensing in the condenser, a smaller amount of water vaporisation results in a lower energy consumption in the condenser. Thus the addition of the alcohol with at least two OH-groups reduces the regenerator condenser duty and also reduces the reboiler energy requirement.

Still another advantage is that as regeneration takes place at elevated pressure the water content of the CO₂-rich gas stream exiting the regenerator is reduced. The CO₂-rich stream is furthermore obtained at relatively high pressure. This facilitates the use of the CO₂-rich stream for enhanced oil recovery or for reinjection into a subterranean formation or aquifer, with less equipment and energy needed for further compression of the CO₂-rich stream.

Another important advantage is that the presence of an accelerator enhances the rate of absorption of CO₂ from the gas into the aqueous solution. The absorption can preferably be done at temperatures in the range of from 10 to 80 °C, thus enabling operating the process in areas with a high ambient temperature.

The process is especially suitable for flue gas streams.

### Detailed description of the invention

In step (a) of the process, the gas comprising CO₂ is contacted with an aqueous solution of one or more carbonate compounds in an absorber where CO₂ reacts with the carbonate compounds to form bicarbonate compounds. The presence of an accelerator enhances the rate of absorption of CO₂ from the gas into the aqueous solution. It is preferred that at least part of the bicarbonate compounds precipitate to form a bicarbonate slurry. This precipitation can take place already in the absorber, but it can also take place in a device placed after the absorber. The absorber is preferably operated at a temperature in the range of from 10 to 80 °C, more preferably in the range of from 25 to 70°C, even more preferably in the range of from 30 to 50°C. At these temperatures the conditions in the absorber are such that the bicarbonate formed precipitates at least partly at a given concentration of carbonate compounds in the aqueous solution.

Treated gas, now comprising only a minor amount of CO₂, leaves the absorber.

In a preferred embodiment of the invention, the invention provides a process for the removal of CO₂ from a gas comprising CO₂, the process comprising the steps of:
(a1) contacting the gas in an absorber with an aqueous solution of one or more carbonate compounds in the presence of an accelerator, and an alcohol comprising at least two OH-groups, thereby reacting at least part of the CO₂ to form a bicarbonate compound, wherein the absorber is operated under conditions such that at least a part of the bicarbonate compound formed precipitates, forming a bicarbonate slurry;
(a2) subjecting at least part of the bicarbonate slurry to a concentration step to obtain an aqueous solution and a concentrated bicarbonate slurry, wherein the concentrated bicarbonate slurry comprises in the range of from 20 to 80 wt% of bicarbonate compounds;
(a3) returning at least part of the aqueous solution to the absorber;
(b) pressurising the concentrated bicarbonate slurry, to obtain a pressurised concentrated bicarbonate slurry;
(c) transferring the pressurised concentrated bicarbonate slurry to a regenerator system and applying heat to liberate CO₂ from the concentrated carbonate slurry to obtain a CO₂-rich gas stream and a regenerated carbonate stream.

The advantage of the preferred process is that by forming a concentrated bicarbonate slurry comprising in the range of from 20 to 80 wt% of bicarbonate compounds, the concentrated bicarbonate slurry maintains a small liquid phase which allows the slurry to remain pumpable in conventional slurry pumps and allows one to avoid the use of more expensive and complex solids handling systems in the solids separation and regeneration step.

In case the bicarbonate precipitates in the absorber, the bicarbonate slurry is withdrawn from the bottom of the absorber and led to a concentrating device. In a further preferred embodiment, the precipitation takes place in a device placed after the absorber.

For the process of the invention it is preferred to subject at least part of the bicarbonate slurry to a concentration step to obtain an aqueous solution and a concentrated bicarbonate slurry. The higher bicarbonate loading of the absorbent can be reached by using this concentration step, as with the concentration step more solids per weight of absorbent is obtained. The concentrated bicarbonate slurry comprises preferably in the range of from 25 to 55 wt% of bicarbonate compounds, and more preferably in the range from 35 to 50 wt% of bicarbonate compounds. The use of such a specific range of bicarbonate compounds allows the concentrated bicarbonate slurry to remain pumpable, without the necessity of complex solids handling processes. The resulting concentrated slurry is led from the concentrating device and pressurised to obtain a pressurised concentrated bicarbonate slurry.

Concentrating the bicarbonate slurry can be performed by any means known to the person skilled in the art. Examples are a settler or a hydrocyclone, or a combination of a vessel wherein further solids are formed, a so-called crystallizer, combined with a cyclone or settler. It is preferred to execute the concentration step by transferring at least part of the bicarbonate slurry to an agitated vessel, to form an agitated slurry, which agitated slurry is at least partly transferred to a separator wherein the agitated slurry is being separated into the aqueous solution and a separated agitated slurry. The aqueous solution is now returned to the absorber column. The separated agitated slurry is returned to the agitated vessel, and is being mixed with the bicarbonate slurry to obtain the concentrated bicarbonate slurry. The advantage of executing the concentration step this way is that a very large solvent flow can be returned to the absorber column to reabsorb CO₂, while operating the agitated vessel at a high concentration of solids and sending a relatively small flow of concentrated bicarbonate slurry to the regenerator. The advantage of sending a relatively small flow of concentrated bicarbonate slurry to the regenerator is that superfluous water is not being heated and cooled down again, costing extra energy. A further advantage is that, owing to the high CO₂ partial pressure after redissolution of the process, the loss of water through evaporation at the top of the regenerator is less.

It is furthermore preferred in the process of the invention that the aqueous solution obtained in step (a3) is cooled to produce a cooled aqueous solution which is transferred to the absorber.

The aqueous solution comprising the bicarbonate compound of step (b) or, in case a slurry is formed, the pressurised concentrated bicarbonate slurry, is transferred to a regenerator system. This might be done via a heat exchanger, where the solution or slurry is heated. Preferably, the pressurised solution or slurry obtained in step (b) is heated in a sequence of multiple heat exchangers before transferring the pressurised solution or slurry to the regenerator system in step (c). More preferably, the sequence of multiple heat exchangers comprises a first heat exchanger, where the pressurised solution or slurry is heated in a first step by exchanging heat with the regenerated carbonate solution obtained in step (c); a second heat exchanger, where the pressurised solution or slurry is heated in a second step using heat from another source than the regenerated carbonate solution; and/or a third heat exchanger, where the pressurised solution or slurry is heated in a third step by exchanging heat with the regenerated carbonate solution.

It is however most preferred to split the the pressurised solution or slurry obtained in step (b) into two parts, a first part and a second part, and that these two parts are heated in two different heat exchangers that are aligned parallel, using different sources of heat to exchange the parts of the pressurised solution or slurry with.

The first part of the pressurised solution or slurry is being heated in the first heat exchanger preferably from at least 20°C, more preferably at least 30°C to preferably at most 110 °C, more preferably at most 100°C. The same is true for the second part: the second part of the pressurised solution or slurry is being heated in the second heat exchanger preferably from at least 20°C, more preferably at least 30°C to preferably at most 110 °C, more preferably at most 100°C. The temperatures at the higher end are preferred because the regenerator is operated at slightly higher temperatures, to release the carbon dioxide from the absorbent.

The pressurised solution or slurry formed in step (b) is thus divided into more parts to be heated separately. Preferably, it is divided into two parts. More preferably, the first part of the pressurised solution or slurry is in the range of from 60 to 80 wt% of the pressurised solution or slurry of step (b), and the second part of the concentrated bicarbonate slurry is in the range of from 20 to 40 wt% of the pressurised solution or slurry of step (b). This split is advantageous, because up to 80% of the required heat is easily obtainable from the hot CO₂ lean solvent from the regenerator.

In the first heat exchanger the first part of the pressurised solution or slurry is heated against the hot lean solvent of the regenerator. When heating the first part of the formed solution or slurry, advantageously the CO₂ lean solvent produced in step (g) is simultaneously cooled to the temperature required in the absorber.

In the second heat exchanger the second part of the concentrated solution or slurry is heated against a second heating source, which second heating source differs from the hot lean solvent of the regenerator. This second heating source is direct or indirect heat recovered from a condenser at the top of the regenerator, from CO₂ compressor interstage coolers, from feed gas to the absorber, from a condensate from a reboiler of the regenerator, from hot flue gas, or from integration from an industrial process, for example from a power plant, a refinery or a chemicals complex. Also combinations of these sources are possible. Preferably, the second heating source is direct or indirect heat recovered from the condenser at the top of the regenerator and or heat recovered directly or indirectly from the CO₂ compressor interstage coolers.

Using such parallel and/or in series sequence of multiple heat exchangers has the advantage that an increased amount of energy and/or heat needed for the regenerator can be provided by the regenerated carbonate solution and another source in the process line up, thereby allowing the reboiler for the regenerator to be of a smaller size.

In the regenerator system further heat is applied to liberate CO₂ from the concentrated carbonate slurry to obtain a CO₂-rich gas stream and a regenerated carbonate stream. Heat is generally supplied to the regenerator via a reboiler. The liberated CO₂ is preferably led from the regenerator to a condenser and removed from the process as a CO₂-rich stream comprising preferably more than 90% of CO₂, more preferably more than 95% of CO₂, even more preferably more than 99% CO₂. The regenerated carbonate stream is preferably led from the regenerator to a heat exchanger, where it is cooled. The cooled carbonate stream is preferably led to a lean solvent cooler and then led to the absorber.

During the regeneration process water is being vaporised, resulting in a loss of energy, as the vaporised water needs to be condensed again requiring extra duty in the condenser. By the addition of the alcohol comprising at least two OH-groups in the absorbent, the regeneration process is substantially improved owing to the reduced water concentration. Firstly, the equilibrium of the carbonate to bicarbonate is shifted, so CO₂ is released more deeply. Secondly, the water vapure pressure is decreased, resulting in less water being vaporised. The effect is that at the same regeneration temperature, more CO₂ is being released and less water vaporised. Less energy is thus required for the regeneration process. Furthermore, as regeneration is deeper, the cyclic loading increases, making the overall capture process more efficient. One might also choose to use a higher regeneration temperature, preferably in the range of from 130°C up to 200°C, more preferably in the range of from 140°C up to 160°C, to increase the release of CO₂ and the cyclic loading of the absorbent even more, minimizing or even lowering the loss in energy by water vaporisation compared to the state of the art process.

The alcohol that is added to the absorbent that enhances the positive effects at regeneration of the loaden absorbent, preferably mixes with water almost ideally or even ideally such that no phase separation takes place. Preferably, the solubility of the carbonate remains higher then the solubility of the bicarbonate in the mixture of water and the added alcohol. Preferably, the boiling point of the alcohol is around the same or higher as the boiling point of water at standard conditions. More preferably, the alcohol has a boiling point in the range of from 100 up to 300°C, even more preferably in the range of from 160°C up to 250°C. Preferably, the alcohol comprises at most 5 carbon atoms, more preferably 2 or 3 carbon atoms. Preferably, the alcohols have the normal paraffinic carbon chain, so no branches. Preferably, the alcohol comprises in the range of from 2 to 4 OH-groups, more preferably 2 or 3 OH groups. Examples of suitable alcohols are 1,2-propanediol, 1,3-propanediol, glycol, glycerine, 1,2-butanediol, 1,3-butanediol, 1,4-butanediol, 1,2,4-butanetriol and 1,5-pentanediol. Combinations thereof are also possible. Most preferably, 1,2-propanediol or glycol or a combination thereof is added to the absorbent.

The amount of alcohol added to the absorbent is as much as is feasible while still sufficient water is present to dissolve carbonate and form bicarbonate. Preferably, the weight ratio water to alcohol is in the range of from 1:5 to 5:1, more preferably the range of from 1:4 to 4:1, even more preferably in the range of from 1:3 to 3:1.

The absorber is preferably operated under temperature conditions such that the bicarbonate compound at least partly precipitates. The absorbing solution comprising the dissolved bicarbonate is preferably subsequently cooled to form bicarbonate crystals, before the concentration step, to improve the efficiency of the process.

The aqueous solution of one or more carbonate compounds preferably comprises in the range of from 2 to 60 wt%, more preferably in the range from 5 to 50 wt% of carbonate compounds.

The one or more carbonate compounds can comprise any carbonate compound that can react with CO₂. Preferred carbonate compounds include alkali or alkali earth carbonates, more preferred are Na₂CO₃ or K₂CO₃ or a combination thereof, as these compounds are relatively inexpensive, commercially available and show favourable solubilities in water.

The aqueous solution of one or more carbonate compounds further comprises an accelerator to increase the rate of absorption of CO₂. Suitable accelerators include compounds that enhance the rate of absorption of CO₂ from the gas into the liquid. The accelerator is preferably selected from the group of primary amines, secondary amines, amino acids, vanadium-containing compounds and borate containing compounds or combinations thereof. More preferably an accelerator comprises one or more compounds selected from the group of primary or secondary amino acids, borate acid containing compounds and saturated 5- or 6-membered N-heterocyclic compounds, which optionally contain further heteroatoms.

A preferred composition of the absorbent would be around 20 wt% of K₂CO₃, around 2 wt% of piperazine as accelerator, around 20 wt% of water and around 60 wt% of propanediol.

The process of the invention is especially suitable for flue gases.

Suitably, the partial pressure of CO₂ in the CO₂-comprising gas contacted with the absorbing solution in step (a) is preferably in the range of from 10 to 500 mbar, more preferably in the range from 30 to 400 mbar and most preferably in the range from 40 to 300 mbar.

Suitably, the regenerator is operated at a temperature sufficiently high to ensure that a substantial amount of CO₂ is liberated from the concentrated carbonate slurry. Preferably, the regenerator is operated at a temperature in the range of from 70 to 170 °C. It will be understood that the regenerator is operated at a higher temperature than the absorber.

Preferably the regenerator is operated at elevated pressure, preferably in the range of from 1.0 to 50 bara, more preferably from 1.5 to 50 bara, still more preferably from 3 to 40 bara, even more preferably from 5 to 30 bara. In the process of the invention the regenerator is preferably operated at a higher temperature than the absorber.

Higher operating pressures for the regenerator are preferred because the CO₂-rich stream exiting the renegerator will then also be at a high pressure. Suitably, the gas stream rich in CO₂ is at a pressure in the range of from 1.5 to 50 bara, preferably from 3 to 40 bara, more preferably from 5 to 30 bara. In applications where the CO₂-rich gas stream needs to be at a high pressure, for example when it will be used for injection into a subterranean formation, it is an advantage that the CO₂-rich gas stream is already at an elevated pressure as this reduces the equipment and energy requirements needed for further pressurisation. In a preferred embodiment, the pressurised CO₂-rich gas stream is used for enhanced oil recovery, suitably by injecting it into an oil reservoir where it tends to dissolve into the oil in place, thereby reducing its viscosity and thus making it more mobile for movement towards the producing well.

Optionally, the gas stream rich in CO₂ is compressed to a pressure in the range of from 60 to 300 bara, more preferably from 80 to 300 bara. Normally, a series of compressors is needed to pressurise the CO₂-rich gas stream to the desired high pressures. A CO₂-rich gas stream which is already at elevated pressure is easier to further pressurise. Moreover, considerable capital expenditure is avoided because the first stage(s) of the compressor, which would have been needed to bring the CO₂-rich stream to a pressure in the range of 5 to 50 bara, is not necessary.

The invention will now be illustrated with the following non-limiting examples.

### Examples

Experiments were performed to demonstrate the effect of the partly replacement of water by alcohols comprising at least two OH-groups. A flask of 30 ml in total was filled with water, an activator and the alcohol. A first important property of the system to measure was the solubility of carbonate and bicarbonate. It was measured via visual techniques. The experiments were all performed at room temperature. The tested alcohols, activators and the results are all summarized in the below table I. Example A is according to the prior art. Examples 1, 2, 3 and 4 are according to the invention. In all the examples piperazine was used as activator. For propanediol, 1,2-propanediol was used. For butanediol, 1,4-butanediol was used.

**Table I: solubility test of potassium carbonate /bicarbonate in different absorbent systems**

| Ex | H2O (g) | Pipera Zine (g) | Alcohol | (g) | Solubility of K2CO3 wt% | Solubility of KHCO3 Wt% | Phase separation |
|---|---|---|---|---|---|---|---|
| A | 30 | 1 | - | - | | | No |
| | | | | | | | |
| 1 | 15 | 1 | Glycol | 5 | 42-49* | | Yes** |
| | 15 | 1 | Glycol | 5 | | < 19 | No |
| 2 | 15 | 1 | Propanediol | 5 | 42-49 | | Yes** |
| | 15 | 1 | Propanediol | 5 | | < 19 | No |
| 3 | 15 | 1 | butanediol | 5 | 42-49 | | Yes** |
| | 15 | 1 | butanediol | 5 | | < 19 | No |
| 4 | 15 | 1 | glycerine | 5 | < 32 | | Yes** |
| | 15 | 1 | glycerine | 5 | | < 32 | No |

| | | | | | | | |
|---|---|---|---|---|---|---|---|
| * the solubility was between 42 and 49 wt% ** phase separation was noticed at a concentration of higher than 19 wt% of K2CO3. | | | | | | | |

The experiments with glycerine showed that there is not much difference in solubility between K2CO3 en KHC03. However, as glycerine is rather viscous, this might bring some technical problems with transport.

## Claims

1. A process for the removal of CO₂ from a gas comprising CO₂, the process comprising the steps of:
(a) contacting the gas in an absorber with an aqueous solution of one or more carbonate compounds in the presence of an accelerator, and an alcohol comprising at least two OH-groups, thereby reacting at least part of the CO₂ to form a bicarbonate compound;
(b) pressurising the aqueous solution comprising the bicarbonate compound, to obtain a pressurised aqueous solution comprising the bicarbonate compound;
(c) transferring the pressurised aqueous solution to a regenerator system and applying heat to liberate CO₂ from the carbonate slurry to obtain a CO₂-rich gas stream and a regenerated carbonate stream.

2. A process according to claim 1, wherein the one or more carbonate compounds include Na₂CO₃ or K₂CO₃ or a combination thereof.

3. A process according to claim 1 or 2, wherein the aqueous solution of one or more carbonate compounds in step a) comprises in the range of from 2 to 80 wt% of carbonate compounds.

4. A process according to any one of claims 1 to 3, wherein the alcohol comprises at most 5 carbon atoms, preferably 2 or 3 carbon atoms.

5. A process according to any one of claims 1 to 4, wherein the alcohol comprises in the range of from 2 to 4 OH-groups, preferably 2 or 3 OH groups.

6. A process according to claim 4 or 5, wherein the alcohol is 1,2-propanediol or glycol or a combination thereof.

7. A process according to any one of claims 1 to 6, wherein the aqueous solution comprises in the range of from 20 to 60 wt% of alcohol.

8. A process according to any one of claims 1 to 7, wherein the absorber is operated under conditions such that at least a part of the bicarbonate compound formed precipitates, forming a bicarbonate slurry.

9. A process according to claim 8, wherein in step (b) at least part of the bicarbonate slurry is subjected to a concentration step to obtain an aqueous solution and a concentrated bicarbonate slurry, wherein the concentrated bicarbonate slurry comprises in the range of from 20 to 80 wt% of bicarbonate compounds and wherein at least part of the aqueous solution is returned to the absorber.

10. A process according to any one of claims 1 to 9, wherein the absorber is operated at a temperature in the range of from 10 to 80 °C, preferably from 20 to 80 °C.

11. A process according to any one of claims 8 to 11, wherein the process further comprises heating the pressurised concentrated bicarbonate slurry in a sequence of multiple heat exchangers before transferring the pressurised concentrated bicarbonate slurry to the regenerator system.

12. A process according to any one of claims 8 to 11, wherein the process further comprises splitting the concentrated bicarbonate slurry into two parts, a first part and a second part, and that these two parts are heated in two different heat exchangers that are aligned parallel, using different sources of heat to exchange the parts of the concentrated bicarbonate slurry with.

13. A process according to any one of the preceding claims, wherein the accelerator is one or more compounds selected from the group of primary amines, secondary amines vanadium-containing compounds and borate-containing compounds, preferably from the group of vanadium-containing compounds, borate-containing compounds, monoethanolamine (MEA) and saturated 5- or 6-membered N-heterocyclic compounds which optionally contain further heteroatoms, more preferably from the group of MEA, piperazine, methylpiperazine and morpholine.

14. A process according to any one of the preceding claims, wherein the partial pressure of CO₂ in the CO₂-comprising gas is in the range of from 30 to 400 mbar.

15. A process according to any one of the preceding claims, wherein the regenerator is operated at a pressure in the range of from 1 to 50 bara, more preferably from 1.5 to 50 bara, even more preferably from 3 to 40 bara, and most preferably from 5 to 30 bara.
